Europäisches Patentamt

European Patent Office

Office européen des brevets

(19)

(11) Veröffentlichungsnummer: **0 213 361**
**B1**

(12) **EUROPÄISCHE PATENTSCHRIFT**

(45) Veröffentlichungstag der Patentschrift:
14.03.90

(51) Int. Cl.⁴: **B23Q 1/18**

(21) Anmeldenummer: 86109977.8

(22) Anmeldetag: 21.07.86

(54) **Spanabhebende Werkzeugmaschine.**

(30) Priorität: 10.08.85 CH 3423/85

(43) Veröffentlichungstag der Anmeldung:
11.03.87 Patentblatt 87/11

(45) Bekanntmachung des Hinweises auf die Patenterteilung:
14.03.90 Patentblatt 90/11

(84) Benannte Vertragsstaaten:
DE FR GB IT

(56) Entgegenhaltungen:
EP-A- 0 080 744
EP-A- 0 112 529
EP-A- 0 121 829
CH-A- 248 889
DE-A- 2 062 880
DE-B- 1 145 459
FR-A- 486 277
FR-A- 1 403 825
FR-A- 1 537 128
US-A- 2 819 037

(73) Patentinhaber: Wyler AG, Im Hölderli,
CH-8405 Winterthur(CH)

(72) Erfinder: Stauber, Siegfried, Hüttenkopfstrasse 32,
CH-8051 Zürich(CH)

(74) Vertreter: Quehl, Horst M., Dipl.-Ing.,
Seestrasse 640 Postfach 90,
CH-8706 Meilen/Zürich(CH)

ACTORUM AG

## Beschreibung

Die Erfindung betrifft eine spanabhebende Werkzeugmaschine mit den Merkmalen des Oberbegriffs des Patentanspruchs 1.

Die Arbeitsgenauigkeit derartiger Maschinen ist von der kleinstmöglichen Verstellgrösse für die formbestimmende Vorschub- und Zustellbewegung des Werkzeuges relativ zum Werkstück abhängig.

Die kleinstmögliche Verstellgrösse selbst ist einerseits von der Genauigkeit des Stellantriebes und andererseits von der Mess- und Regelgenauigkeit für diese Verstellbewegung abhängig.

Bei bekannten Werkzeugmaschinen wird die formbestimmende Bewegung in Richtung der zwei Komponenten durch übliche Getriebe, d.h. durch Spindel- oder Zahnstangenantriebe ausgeführt, die jedoch nur eine begrenzte Genauigkeit ermöglichen.

Durch die DE-B-1 145 459 und EP-A-0 112 529 ist es bekannt, die feste Einjustierung des Werkzeuges relativ zu seinem Trägerschlitten über Keilflächen auszuführen. Dies erfolgt jedoch nicht während des Eingriffs des Werkzeuges mit dem Werkstück, sondern nach Lösen einer eine starre Position bestimmenden Spanneinrichtung. Das abschliessende erneute Verspannen macht dabei häufig eine neue Korrektur der Justierposition erforderlich.

Der Erfindung liegt die Aufgabe zugrunde, die Arbeitsgenauigkeit einer Werkzeugmaschine durch Verkleinern der kleinstmöglichen Verstellgrösse in Richtung der genannten formbestimmenden Bewegung zu verbessern, so dass durch sie Körper mit geringerer Oberflächenrauhigkeit und genauerer Oberflächengeometrie herstellbar sind. Somit soll eine Werkzeugmaschine gefunden werden, die besonders auch für die Herstellung hochpräziser optischer Teile durch Bearbeitung mit einem Diamant-Werkzeug geeignet ist. Die Lösung dieser Aufgabe erfolgt aufgrund der kennzeichnenden Merkmale des Patentanspruchs 1.

Aufgrund dieser Merkmale ergibt sich, dass bei einer bestimmten relativen Verschiebebewegung zwischen dem Trägerschlitten und dem Basisschlitten, deren minimaler Betrag von der kleinstmöglichen Verstellgrösse bestimmt ist, sich nur eine um ein vielfaches kleinere Zustellbewegung ergibt, die folglich entsprechend kleiner ist als bisher möglich gewesen ist. Der Bruckteil der Grösse der Zustellbewegung von der Grösse der relativen Verschiebebewegung zwischen Trägerschlitten und Basisschlitten ist durch die Grösse des spitzen Winkels bestimmt, unter dem diese Verschiebebewegung erfindungsgemäss erfolgt. Je kleiner dieser Winkel ist, umso kleiner ist die kleinstmögliche Verstellgrösse in Richtung der Zustellbewegung. Bei kleineren Winkeln jedoch verringert sich der grösstmögliche Verstellbereich in Richtung der Zustellbewegung, jedoch ist es auch möglich, mehrere Schlitten neben- bzw. übereinander vorzusehen, die jeweils eine Führungsfläche aufweisen, die im spitzen Winkel zu einer anderen Führungsfläche verläuft. Es versteht sich, dass dabei jeweils ein Verstellantrieb für die Relativbewegung zwischen zwei aufeinandergleitenden Schlitten erforderlich ist.

Es versteht sich, dass die erfindungsgemässe Massnahme nur sinnvoll ist, wenn die Werkzeugmaschine auch in anderer Hinsicht für hohe Arbeitsgenauigkeit ausgeführt ist. Die Führungsschlitten sollten zur Vermeidung von Schwingungen möglichst grosse Massen aufweisen und mit möglichst geringer Reibung geführt sein. Eine stick-slip-freie Führung, d.h. ein ruckfreies Gleiten lässt sich durch eine Führung der Schlitten mittels Druck-Vakuum-Luftlagern erreichen. Ein hierfür geeigneter Lagerkörper ist Gegenstand des US-Patentes Nr. 4,558,909 der gleichen Anmelderin.

Derartige Luftlager können an verschiedenen Stellen, z.B. an einer Prisma-Schlittenführung vorgesehen sein. Die Antriebe für die Schlitten sollen möglichst steiff sein und ihre Regelung frei von Schwingungen sein. Der z.B. von einer Drehspindel getragene Werkstückträger ist vorzugsweise oberhalb eines durch den Trägerschlitten bewegten Werkzeugträgers angeordnet, so dass die Bearbeitungsspäne nach unten fallen können.

Die Zeichnungen zeigen Ausführungsbeispiele einer erfindungsgemässen Werkzeugmaschine in schematischer Darstellung.

Fig. 1 bis 3 zeigen Vorderansichten drei verschiedener Ausführungsbeispiele einer Werkzeugmaschine und

Fig. 4 eine Anordnung für einen Werkzeug- oder Werkstückträger mit drei Schlitten.

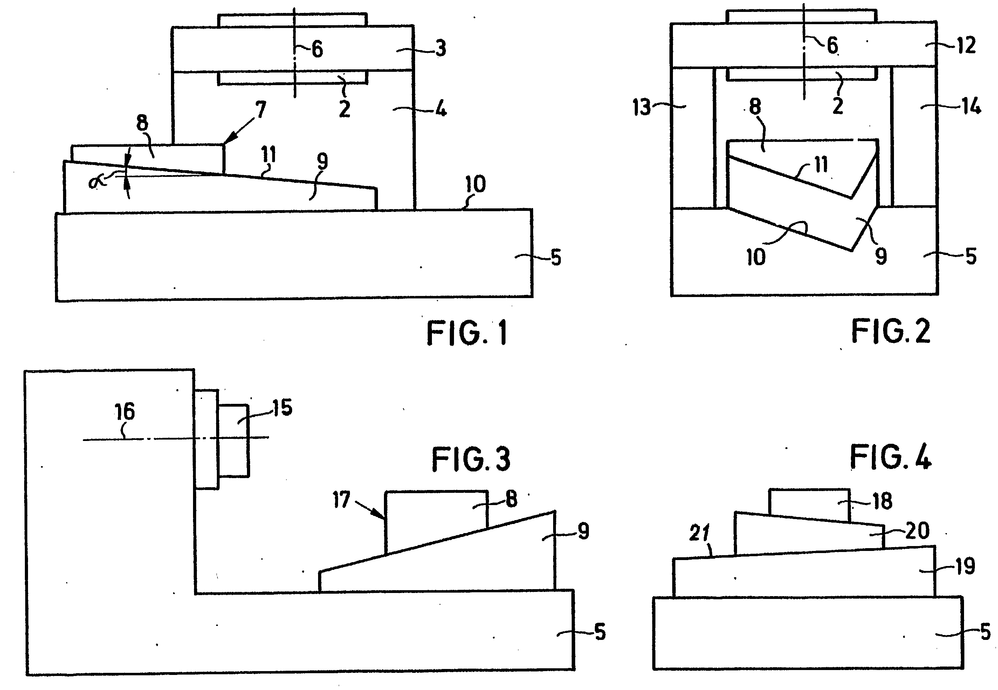

Im Beispiel nach Fig. 1 ist ein eine drehende Arbeitsbewegung ausführender Werkstückträger 2 am horizontal auskragenden Teil 3 eines Vertikalständers 4 gelagert, der starr mit dem Maschinenbett 5 verbunden ist. Ein nicht-dargestelltes Werkstück kann durch übliche Mittel an dem Werkstückträger 2 befestigt werden, so dass seine zu bearbeitende Fläche nach unten gekehrt ist und es sich um die Vertikalachse 6 dreht. Für die Bearbeitung einer Hohlspiegelfläche mittels eines am Werkzeugträger 7 befestigten, nicht-dargestellten Diamantwerkzeuges beträgt die Umfangsgeschwindigkeit des Werkstückes beispielsweise 30 m/s.

Der Werkzeugträger 7 hat einen Trägerschlitten 8 und einen Basisschlitten 9. Der Basisschlitten 9 gleitet in horizontaler Richtung, bzw. im Winkel von 90° zur Drehachse 6 auf einer Schlittenführung 10 des Maschinenbetts 5. Auf der Oberseite des Basisschlittens 9 befindet sich eine Schlittenführungsfläche 11 für den Trägerschlitten 8, die unter einem spitzen Winkel α gegenüber der horizontal gerichteten Schlittenführung 10 geneigt ist. Durch nichtdargestellte Antriebe, z.B. Spindelantriebe oder hydraulische Antriebe, ist der Basisschlitten 9 gegenüber dem Maschinenbett 5 und der Trägerschlitten 8 gegenüber dem Basisschlitten 9 verschiebbar. Die Länge der Schiebebewegung wird durch bekannte hochpräzise Messgeräte gemessen und einer zentralen elektronischen Steuereinheit zugeführt. Durch eine geeignete elektronische Steuerung ist es möglich, dass der Trägerschlitten 8 durch Verschiebung auf dem Basisschlitten 9 eine Zustellbewegung in einer Richtung parallel zu der Drehachse 6 ausführt, ohne dass er seinen seitlichen Abstand von der Drehachse 6 verändert, indem der Basisschlitten eine Gegenbewegung relativ zum Maschinenbett 5 ausführt. Die Vorschubbewegung für die spanabhebende Bearbeitung erfolgt durch die Bewegung des Basisschlittens 9 auf der Schlittenführung 10.

Quer zur Bewegungsrichtung können die Schlittenführungen 10, 11 die am Beispiel der Fig. 2 gezeigte winkelförmige Querschnittsform aufweisen, durch die sich auch eine seitliche Führung ergibt. Diese Querschnittsform ist besonders geeignet für die stabile Lagerung mittels der eingangs erwähnten Druck-Vakuum-Luftlager.

Zwischen einem Trägerschlitten 18 und einem Basisschlitten 19 kann entsprechend der schematischen Darstellung in Fig. 4 noch ein im Querschnitt keilförmiger Zwischenschlitten 20 vorgesehen sein, der in Richtung der Zustellbewegung einen grösseren Verstellbereich ermöglicht. Soll der Trägerschlitten 18 eine Zustellbewegung nur in einer Richtung parallel zur Drehachse 6 ausführen, so führt der Zwischenschlitten 20 eine der Verschiebebewegung des Trägerschlittens 18 entgegengesetzte Verschiebebewegung auf einer ebenfalls im spitzen Winkel geneigten Schlittenführung 21 aus, die zur Grösse der Zustellbewegung beiträgt.

In Fig. 2 sind die dem Ausführungsbeispiel nach Fig. 1 entsprechenden Teile mit den gleichen Bezugsziffern versehen. In diesem Ausführungsbeispiel nach Fig. 2 erstreckt sich ein Trägerteil 12, in dem der Werkstückträger 2 um die Achse 6 drehbar gelagert ist, brückenartig quer über den Trägerschlitten 8, indem er von zwei Vertikalträgern 13, 14 getragen ist, die ihn starr mit dem Maschinenbett 5 verbinden.

Das Ausführungsbeispiel der Fig. 3 zeigt eine Anordnung ähnlich einer üblichen Drehmaschine, bei der sich der Werkstückträger 15 an einer horizontal verlaufenden Achse 16 dreht. Die Zustellbewegung des Werkzeugträgers 17 erfolgt in vertikaler Richtung im Winkel zu 90° zu dieser Drehachse 16.

Das Ausführungsbeispiel nach Fig.3 kann auch so abgewandelt sein, dass der Basisschlitten 9 um 90° verdreht angeordnet ist, so dass er sich ähnlich wie beim Ausführungsbeispiel nach Fig.1 anstatt parallel zur Achse 16 quer zu ihr bewegt. Eine solche Wekzeugmaschine ist insbesondere zum Trennschneiden, z.B. von Quarzkörpern für elektronische Anwendungen geeignet, wobei dann das Teil 15 zum Werkzeugträger für eine Diamant-Trennscheibe wird und das Teil 17 zum Werkstückträger.

Es versteht sich, dass auch bei den Ausführungsbeispielen der Fig.1 und 2 der Werkzeugträger die Funktion des Werkstückträgers übernehmen kann , mit entsprechender Umkehr der Funktion des Werkstückträgers.

Aufgrund der Erfindung ergibt sich eine Untersetzung der kleinstmöglichen Verstellbewegung entsprechend dem Winkel α um das Vielfache, beispielsweise um das Fünf-bis Zehnfache, so dass die Zustell- oder Korrekturbewegungen um das entsprechende Vielfache genauer sind als die Vorschub- bzw. Längsbewegung. Eine erfindungsgemässe Werkzeugmaschine ist somit besonders geeignet, um Oberflächen sehr geringer Rauhigkeit von z.B. weniger als 0,2 μ herzustellen, wobei auch die Oberflächengeometrie mit bisher nicht möglicher Genauigkeit verwirklicht werden kann. Eine erfindungsgemässe Werkzeugmaschine ist somit besonders auch für die Herstellung von grossflächigen Hohlspiegeln für hochpräzise optische Einrichtungen geeignet.

**Patentansprüche**

1. Spanabhebende Werkzeugmaschine, mit einem Werkstückträger (2, 15) und einem Werkzeugträger (7, 17), von denen einer mit einem Antrieb für die Arbeitsbewegung und der andere mit Antrieben für zwei Komponenten der zwischen Werkstück und Werkzeug erfolgenden, sich jeweils aus relativen Vorschub- und Zustellbewegungen ergebenden, formbestimmenden Bewegung verbunden ist, dadurch gekennzeichnet, daß der die formbestimmende Bewegung ausführende Werkzeug- oder Werkstückträger einen Trägerschlitten (8) und einen Basisschlitten (9) aufweist, die beide in gleicher Richtung verschiebbar sind, wobei die Führungsfläche (11) zwischen beiden Schlitten (8, 9) im spitzen Winkel (α) von weniger als 45° zu der in Richtung einer der Bewegungskomponenten verlaufenden Führungsfläche (10) zwischen einem feststehenden Schlittenbett (5) und dem Basisschlitten (9) gerichtet ist, so daß eine Relativbewegung zwischen beiden Schlitten die andere, senkrecht zum Schlittenbett (5) gerichtete Bewegungskomponente verursacht, welche Bewegungskomponente der Zustellbewegung entspricht.

2. Werkzeugmaschine nach Anspruch 1, dadurch gekennzeichnet, dass die Schlittenführungen Druck-Vakuum-Luftlager aufweisen.

3. Werkzeugmaschine nach Anspruch 2, dadurch gekennzeichnet, dass die Schlittenführungen einen winkelförmigen Querschnitt (Fig. 2) aufweisen.

4. Werkzeugmaschine nach Anspruch 1, dadurch gekennzeichnet, dass die Führungsfläche (11) unter einem Steigungswinkel von 1:5 bis 1:10 verläuft.

5. Werkzeugmaschine nach Anspruch 1, dadurch gekennzeichnet, dass der Werkzeugträger (7, 17) unterhalb des Werkstückträgers (2, 15) angeordnet ist.

6. Werkzeugmaschine nach einem der Ansprüche 1 bis 5, dadurch gekennzeichnet, dass zwischen dem Trägerschlitten (18) und dem Basisschlitten (19) ein im Querschnitt keilförmiger Zwischenschlitten (20) vorgesehen ist.

**Claims**

1. Machine tool working by chipping, with a work carrier (2, 15) and a tool carrier (7, 17), one of which is connected to a drive for the working movement and the other to drives for two components of the shape-determining movement taking place between the workpiece and the tool and resulting from the relative feed and infeed movements, characterized in that the tool or work carrier performing the shape-determining movement has a carrier slide (8) and a base slide (9), both of which are displaceable in the same direction, the guide surface (11) between the two slides (8, 9) being directed at an acute angle ($\alpha$) of less than 45° to the guide surface (10) between a fixed slide bed (5) and the base slide (9) running in the direction of one of the components of motion, so that a relative movement between the two slides causes the other component of motion at right angles to slide bed (5) and which corresponds to the infeed movement.

2. Machine tool according to claim 1, characterized in that the slide guides have pressure-vacuum-air bearings.

3. Machine tool according to claim 2, characterized in that the slide guides have an angular cross-section (Fig. 2).

4. Machine tool according to claim 1, characterized in that the guide surface (11) is under a pitch angle of 1:5 to 1:10.

5. Machine tool according to claim 1, characterized in that the tool carrier (7, 17) is positioned below the work carrier (2, 15).

6. Machine tool according to one of the claims 1 to 5, characterized in that a cross-sectionally, wedge-shaped intermediate slide (20) is provided between carrier slide (18) and base slide (19).

## Revendications

1. Machine-outil travaillant par enlèvement de copeaux, comportant un support de pièce à usiner (2, 15) et un porte-outil (7, 17), dont l'un est raccordé à une commande pour le mouvement d'usinage et l'autre à des commandes pour deux composantes des mouvements de formage se faisant entre la pièce à usiner et l'outil, et obtenus chaque fois par des mouvements relatifs d'avance et d'approche, caractérisée en ce que le porte-outil ou le support de pièce à usiner effectuant le mouvement de formage présente un chariot support (8) et un chariot de bâti (9) qui, tous deux, peuvent se déplacer dans la même direction, tandis que la surface de guidage de chariot (11) entre les deux chariots (8, 9) est dirigée, entre un bâti de machine (5) fixe et le chariot de bâti (9), suivant un angle aigu ($\alpha$), de moins de 45°, par rapport à la surface de guidage (10), s'étendant suivant la direction de l'une des composante du mouvement, de telle façon qu'un mouvement relatif entre les deux chariots provoque l'autre composante du mouvement dirigée perpendiculairement au bâti de machine (5), composante qui est proportionnelle à la composante du mouvement d'approche.

2. Machine-outil suivant la revendication 1, caractérisée en ce que les guidages de chariot présentent des paliers à air pression-vide.

3. Machine-outil suivant la revendication 2, caractérisée en ce que les guidages de chariot présentent une section formant un angle (figure 2).

4. Machine-outil suivant la revendication 1, caractérisée en ce que les surfaces de guidage (11) présentent un angle d'inclinaison de 1:5 à 1:10.

5. Machine-outil suivant la revendication 1, caractérisée en ce que le porte-outil (7, 17) est disposé en dessous du support de pièce à usiner (2, 15).

6. Machine-outil suivant l'une quelconque des revendications 1 à 5, caractérisée en ce qu'un chariot intermédiaire (20), présentant une section en forme de coin, est prévue entre le chariot support (18) et le chariot de bâti (19).

FIG. 1

FIG. 2

FIG. 3

FIG. 4

EP 0 213 361 B1